(19) Europäisches Patentamt
European Patent Office
Office européen des brevets

(11) **EP 3 676 976 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **18759861.0**

(22) Anmeldetag: **09.08.2018**

(51) Internationale Patentklassifikation (IPC):
*H04H 60/42* (2008.01)   *H04H 60/15* (2008.01)
*H04H 40/09* (2008.01)

(52) Gemeinsame Patentklassifikation (CPC):
**H04H 60/15; H04H 40/09; H04H 60/42**

(86) Internationale Anmeldenummer:
**PCT/EP2018/071575**

(87) Internationale Veröffentlichungsnummer:
**WO 2019/042731 (07.03.2019 Gazette 2019/10)**

(54) **VERFAHREN ZUM ORTSSELEKTIVEN SENDEN EINES SIGNALS MITTELS FUNK, VERFAHREN ZUM ORTSSELEKTIVEN EMPFANGEN EINES SIGNALS MITTELS FUNK SOWIE SENDE-/ EMPFANGSEINHEIT ZUR DURCHFÜHRUNG EINES SOLCHES VERFAHRENS**

METHOD FOR THE LOCATIONALLY SELECTIVE TRANSMITTING OF A SIGNAL BY MEANS OF RADIO, METHOD FOR THE LOCATIONALLY SELECTIVE RECEIVING OF A SIGNAL BY MEANS OF RADIO, AND TRANSMITTING/RECEIVING UNIT FOR CARRYING OUT SUCH A METHOD

PROCÉDÉ POUR ÉMETTRE AVEC SÉLECTION D'UN EMPLACEMENT UN SIGNAL PAR RADIO, PROCÉDÉ POUR RECEVOIR AVEC SÉLECTION D'UN EMPLACEMENT UN SIGNAL PAR RADIO AINSI QU'UNITÉ D'ÉMISSION/RÉCEPTION POUR L'EXÉCUTION D'UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2017 DE 102017215073**

(43) Veröffentlichungstag der Anmeldung:
**08.07.2020 Patentblatt 2020/28**

(73) Patentinhaber: **Robert Bosch GmbH**
**70442 Stuttgart (DE)**

(72) Erfinder:
• **SAMBALE, Klaus**
 **46047 Oberhausen (DE)**
• **HOFMANN, Frank**
 **31139 Hildesheim (DE)**
• **THEIN, Christoph**
 **31139 Hildesheim (DE)**

(56) Entgegenhaltungen:
WO-A2-2008/147085    US-A1- 2003 153 288
US-A1- 2010 146 562    US-A1- 2015 305 062

**Beschreibung**

Die vorliegende Erfindung betrifft ein Verfahren zum ortsselektiven Senden und Empfangen eines Signals mittels Funk und ein korrespondierendes System zum ortsselektiven Senden und Empfangen eines Signals mittels Funk.

Stand der Technik

Im Stand der Technik sind mobilfunkbasierte Geocast-Dienste bekannt. Hierbei wird auf der Applikationsebene anhand einer Position des Teilnehmers entschieden, ob eine Nachricht für den entsprechenden Teilnehmer relevant ist. Falls die Nachricht des Geocast-Dienstes für Teilnehmer einer vorgegebenen Region bestimmt ist, in der sich der entsprechende Teilnehmer aufhält, so wird diese Nachricht dem entsprechenden Teilnehmer mitgeteilt. Falls sich der entsprechende Teilnehmer jedoch nicht in der vorgegebenen Region aufhält, so wird die Nachricht dem Teilnehmer nicht mitgeteilt. In beiden Fällen wird die Nachricht jedoch an den Teilnehmer übermittelt.

US 2003/0153288 A1 offenbart, dass ein Empfänger einzelne Benutzer mit ausgewählten Informationen versorgt. Ein digitales Hochgeschwindigkeits-Programmsignal wird ausgestrahlt und enthält Programmdaten, die zu einer Referenzzeit beginnen und in festgelegten Intervallen wiederholt werden. Ein Indexsignal, das die Kennung des Empfängers in Verbindung mit der Referenzzeit und den Intervallinformationen enthält, wird ebenfalls gesendet. Der Empfänger überwacht das Indexsignal auf seine Kennung. Wenn der Empfänger seine Kennung erkennt, lädt der Empfänger die Zeit- und Abstimminformationen herunter. Der Empfänger verwendet dann die Zeit- und Abstimminformationen, um das vom Benutzer gewählte Programm zu empfangen, herunterzuladen und zu speichern. In einigen Ausführungsformen ersetzt ein Transceiver den Empfänger, um dem Benutzer die Möglichkeit zu geben, Remote-Programmanforderungen zu stellen.

WO 2008/147085 A2 offenbart um eine auf lokaler Werbung basierende E-Commerce-Methode und ein E-Commerce-System. Das auf lokaler Werbung basierende E-Commerce-System umfasst lokale Systeme, die separat an entsprechenden vorbestimmten Standorten installiert und so konfiguriert sind, dass sie den Inhalt der Werbung anzeigen, sowie einen Systemserver, der so konfiguriert ist, dass er Werbeinformationen bereitstellt, die den lokalen Systemen zugänglich gemacht werden. Der Systemserver stellt als Antwort auf eine Werbeanforderung eine oder mehrere lokale Informationen unter Berücksichtigung von Bereichen ein, die auf einem Standort eines Geschäfts basieren, das die Werbung angefordert hat, stellt für jede der lokalen Informationen ein oder mehrere lokale Systeme ein, durch die die Werbung gezeigt werden soll, und wendet eine unterschiedliche Anzahl von Aufnahmen der Werbung durch die lokalen Systeme auf die jeweiligen lokalen Informationen an.

Offenbarung der Erfindung

Gegenstand der vorliegenden Erfindung ist ein Verfahren zum ortsselektiven Senden und Empfangen eines Signals gemäß dem Anspruch 1 und ein korrespondierendes System zum ortsselektiven Senden und Empfangen eines Signals gemäß dem Anspruch 7.

Das nachfolgend offenbarte Verfahren dient dem ortsselektiven Senden und Empfangen eines Signals mittels der Funktechnik. In der Funktechnik werden Signale aller Art mit Hilfe modulierter elektromagnetischer Wellen mittels Radiowellen drahtlos übertragen. Zur Funktechnik gehören unter anderem der Mobilfunk und der Rundfunk.

Bevorzugt wird unter einem Empfänger ein nicht ortsfester Empfänger verstanden, zum Beispiel ein Mobilfunkgerät oder ein in einem Kraftfahrzeug installierter Mobilfunkempfänger. Der Empfänger kann jedoch auch ortsfest sein.

Unter dem Sender wird bevorzugt ein ortsfester Mobilfunksender verstanden. Der Sender kann jedoch auch nicht ortsfest sein.

Das Verfahren zum ortsselektiven Senden und Empfangen kann zum Beispiel in einem Geocast-System verwendet werden. Hierbei sendet der Sender selektiv nur an die Empfänger, die sich in einem vorgegebenen örtlichen Bereich befinden, bestimmte Informationen. Hierbei kann der vorgegebene örtliche Bereich eine Region oder ein Gebiet sein. Bevorzugt ist die Region oder das Gebiet zusammenhängend. Ein anderes Anwendungsbeispiel ist die ortsselektive Adressierung von Sensoren, sei es von ortsfesten oder von nicht ortsfesten Sensoren. Die bestimmten Informationen, welche der Sender selektiv an die oben genannten Empfänger sendet, können insbesondere Informationen sein, welche für die Empfänger, welche sich in dem vorgegebenen örtlichen Bereich befinden, besonders relevant sind. Dies können zum Beispiel Wetterinformationen oder Verkehrsinformationen über den vorgegebenen örtlichen Bereich sein.

Bei dem Verfahren zum Senden und Empfangen sind sowohl ein Sender als auch ein Empfänger auf dieselbe Zeitreferenz synchronisiert. Dies kann z.B. durch eine Vielzahl von sich periodisch wiederholenden Zeitpunkten geschehen. Diese vorgegebenen Zeitpunkte müssen jedoch sich nicht zwangsweise periodisch wiederholen. Es genügt, dass die vorgegebenen Zeitpunkte dem Sender und dem Empfänger bekannt sind.

Bei dem Verfahren zum Senden und Empfangen empfängt der Empfänger zu einem Zeitpunkt der vorgegebenen Zeitpunkte ein vom Sender gesendetes Signal und demoduliert es, falls der Empfänger das Signal zu einem Zeitpunkt der vorgegebenen Zeitpunkte empfangen hat.

Hierbei gibt es ein Zeitfenster, innerhalb dessen der Empfänger das Signal empfangen kann. Dieses Zeitfenster hängt insbesondere von der Struktur des gesendeten Signals ab. Ein Beispiel hierfür ist die Cyclic-Prefix-Erweiterung eines OFDM-Symbols, welches das OFDM-Symbol auch bei zeitlichen Verschiebungen in gewissen Grenzen am Empfänger demodulierbar macht.

Im ersten Schritt des Verfahrens zum ortsselektiven Senden und Empfangen bestimmt der Sender einen Empfangsort, an dem sich der Empfänger befindet und zu dem er das Signal selektiv senden will, wobei der Empfangsort sich innerhalb einer ringförmigen Empfangszone befindet. Hierbei hängt eine Position der Empfangszone von einer Position des Senders und einer Signallaufzeit ab. Da es ein Zeitfenster gibt, innerhalb dessen der Empfänger das Signal empfangen kann, weist die Empfangszone in der Regel eine Kreisringform auf. Falls der Sender das Signal in eine gewisse bevorzugte Richtung sendet, weist die Empfangszone eine Kreisringsegmentform auf. Die Breite der Empfangszone, d.h. eine radiale Ausdehnung der Empfangszone, hängt von der Struktur des gesendeten Signals ab.

In einem zweiten Schritt des Verfahrens ändert der Sender eine radiale Ausdehnung der ringförmigen Empfangszone durch eine Wahl der Signalstruktur und sendet der Sender das Signal. Hierbei sendet der Sender das Signal zum einem Zeitpunkt, der vor dem dem Sender und dem Empfänger vorher bekannten Empfangszeitpunkt liegt. Der vorher bekannte Empfangszeitpunkt ist ein Zeitpunkt der vorgegebenen Zeitpunkte der Zeitreferenz. Die Zeitdifferenz zwischen Sendezeitpunkt und Empfangszeitpunkt entspricht der Signallaufzeit vom Sender zur Empfänger, so dass das gesendete Signal zu dem vorher bekannten Empfangszeitpunkt beim Empfänger eintrifft. Hierbei kann das Senden isotrop, d.h. richtungsunabhängig, oder richtungsabhängig sein. Das richtungsabhängige Senden des Signals kann durch Beamforming oder gerichtete Antennen geschehen.

In einem dritten Schritt des Verfahrens empfängt und demoduliert der Empfänger, welcher sich innerhalb der ringförmigen Empfangszone mit der geänderten radialen Ausdehnung befindet, das Signal.

Durch das Verfahren zum ortsselektiven Senden und Empfangen eines Signals mittels Funk kann vorteilhafterweise erreicht werden, dass ein Sender ein Signal selektiv an einen sich innerhalb der Empfangszone aufhaltenden Empfänger senden kann.

Gemäß einer bevorzugten Ausführungsform des Verfahrens zum ortsselektiven Senden und Empfangen kann der Empfangsort innerhalb der Empfangszone mit einer Genauigkeit zwischen 300 m und 2 m festgelegt werden. Es ist weiter bevorzugt, dass die Genauigkeit zwischen 300 m und 1 cm liegt. Dies hat den Vorteil, dass eine Position eines gewünschten Empfängers bis auf die genannte Genauigkeit bekannt ist.

Gemäß einer bevorzugten Ausführungsform wird das Signal vom Sender so gesendet, dass nur ein Empfänger, welcher sich innerhalb der Empfangszone befindet, das Signal empfangen kann. Gemäß einer weiteren bevorzugten Ausführungsform wird das Signal vom Sender so, insbesondere durch eine Wahl des Zeitpunkts, gesendet, dass ohne weitere Synchronisation nur ein Empfänger, welcher sich innerhalb der Empfangszone befindet, das Signal empfangen kann. Gemäß einer weiteren bevorzugten Ausführungsform liegt der Grund dafür, dass ohne weitere Synchronisation nur ein Empfänger, welcher sich innerhalb der Empfangszone befindet, das Signal empfangen kann, darin begründet, dass das vom Sender gesendete Signal so moduliert ist, dass nur ein Empfänger, welcher sich innerhalb der Empfang von befindet, das gesendete Signal sinnvoll demodulieren kann. Hierbei wird unter dem Begriff "sinnvoll demodulieren" verstanden, dass das demodulierte Signal im Rahmen der jeweiligen Anwendung weiter verarbeitet werden kann. Dies hat den Vorteil, dass Empfänger, die das Signal nicht empfangen sollen, schon nach der Demodulation des Signals wissen, ob es für die Empfänger bestimmt ist.

Dass nur ein Empfänger, welcher sich innerhalb der Empfangszone befindet, das Signal ohne weitere Synchronisation des Signals empfangen kann, kann bevorzugt durch eine geeignete Wahl eines entsprechenden Sendeverfahrens, wie zum Beispiel eines Spreizverfahrens oder einer Mehrträgerübertragung mit Cyclic Prefix als Modulationsart erreicht werden. Hierbei führt eine zu kurze oder eine zu lange Signallaufzeit zu einer nicht sinnvollen Demodulation, die durch Fehlerschutzmechanismen schon in der physikalischen Übertragungsschicht verworfen wird.

Gemäß einer weiteren bevorzugten Ausführungsform verwendet der Sender im Rahmen eines Spreizverfahrens eine CAZAC-Funktion oder eine CAZAC-Folge zur Modulation des Mobilfunksignals und der Empfänger eine entsprechende Demodulation.

Eine CAZAC-Funktion oder eine CAZAC-Folge ist eine komplexwertige mathematische Folge oder Funktion, die eine konstante Amplitude besitzt und deren Autokorrelation Null ergibt (engl: constant amplitude zero autocorrelation).

Für eine Ausbreitung eines elektromagnetischen Signals hat dies den Vorteil, dass auch bei Mehrwegeausbreitung keine Störung auftritt, da die verzögert bei dem Empfänger ankommenden ZC-Folgen orthogonal zueinander stehen.

Bevorzugt ist für Spreizverfahren die CAZAC-Folge eine Zadoff-Chu-Folge (ZC-Folge). Für den komplexen Wert an jeder Position n von jeder Zadoff-Chu-Folge mit dem Parameter u gilt:

$$x_u(n) = e^{-i\frac{\pi \cdot u \cdot n(n+1+2\cdot q)}{N_{ZC}}},$$

mit

$$0 \leq n < N_{ZC},$$
$$0 < u < N_{ZC} \ und \ ggT(N_{ZC}, u) = 1,$$
$$q \in \mathbb{Z},$$

wobei $N_{ZC}$ für die Länge der Zadoff-Chu-Folge steht. Die Abkürzung ggT steht für den größten gemeinsamen Teiler der beiden in Klammern angegebenen ganzzahligen Werte.

Eine CAZAC-Folge kann sowohl im Verfahren zum selektieren Senden als auch im Verfahren zum Empfangen des Signals verwendet werden.

Die Verwendung einer CAZAC-Folge hat den Vorteil, dass diese einfach generiert werden kann und die Demodulation bei einer zeitlichen Verschiebung, welche einen Empfang außerhalb der Empfangszone entspricht, durch die Eigenschaft der verschwindenden Autokorrelation keinen Beitrag leistet. Dadurch wird am Empfänger deutlich, dass die Nachricht nicht für den Empfänger bestimmt ist und mögliche Interferenz mit anderen Signalen vermieden.

Bevorzugt findet das Senden und / oder Empfangen auf der Ebene der Bitübertragungsschicht statt. Die Bitübertragungsschicht ist die Schicht 1 im OSI-Referenzmodell. Sie legt die elektronischen, funktionalen und prozeduralen Parameter und Hilfsmittel für die physikalische Verbindung zwischen Einheiten an einem Netz fest. Die wichtigste Funktion der Bitübertragungsschicht ist die Aufrechterhaltung einer physikalischen Verbindung. Hierbei werden insbesondere die Struktur der Bits, die Bedeutung der Bits und die Methoden zur Übertragung einzelner Bits festgelegt. Die für PC-LANs relevanten Standards umfassen auch das Übertragungsmedium, die Datenstecker, Verstärkerpegel etc. Das OSI-Modell (engl.: Open Systems Interconnection Model) ist ein Referenzmodell für Netzwerkprotokolle als Schichtenarchitektur. Es wird von der International Telecommunication Union (ITU) und der International Organization for Standardization (ISO) als Standard veröffentlicht. Gegenüber Ausführungsformen, bei denen erst in der Anwendungsebene eine Entscheidung darüber gefällt wird, wohin das Signal gesendet wird bzw. von wo das Signal empfangen wird, hat das vorliegende Merkmal den Vorteil, dass das Signal wesentlich schneller weiter verarbeitet werden kann, da der Aufwand zur Bearbeitung jedes ankommenden Signals durch den kompletten Kommunikationsprotokollstack entfällt.

Gemäß einer bevorzugten Ausführungsform sendet der Sender das Signal in eine vorgegebene Richtung oder empfängt der Empfänger das Signal aus einer vorgegebenen Richtung. Diese Ausgangsform kann mittels Beamforming oder gerichteten Antennen realisiert werden. Diese Ausgangsform hat den Vorteil, dass die Selektivität des Sendens oder Empfangens weiter erhöht ist.

Bevorzugt sind der Sender als auch der Empfänger durch das Globale Positionsbestimmungssystem (engl.: Global Positioning System) auf dieselbe Zeitreferenz synchronisiert. Das Globale Positionsbestimmungssystem hat den Vorteil, dass dieses nahezu überall zur Verfügung steht und einen weit verbreiteten Standard darstellt.

Gemäß einer bevorzugten Ausführungsform kann eine radiale Ausdehnung der ringförmigen Empfangszone vom Sender durch eine Wahl der Signalstruktur vergrößert werden. Beispielsweise kann die Breite der Empfangszone durch eine Wahl einer Länge eines Cyclic Prefix geändert werden. Durch ein längeres Cyclic Prefix kann das Symbol mit einer größeren absoluten zeitlichen Verschiebung sinnvoll demoduliert werden. Dies betrifft insbesondere OFDM-basierte Systeme. Durch dieses Merkmal wird vorteilhafterweise erreicht, dass das Signal an mehr Empfänger ortsselektiv gesendet werden kann.

Gemäß einer weiteren Ausführungsform kann eine Breite der ringförmigen Empfangszone durch eine zusätzliche Synchronisation am Empfänger vergrößert werden. Hierdurch wird ergänzend zur gemeinsamen Zeitreferenz der Empfangsbereich unabhängig vom Sender am Empfänger vergrößert. Dies hat den Vorteil, dass das Signal an mehrere Empfänger gesendet werden kann. Ferner hat dies den Vorteil, dass das Signal von mehreren Empfängern empfangen werden kann.

Bevorzugt wird das ortsselektive Senden und Empfangen in einem Geocast-System verwendet. Dies hat den Vorteil, dass die durch das Geocast-System versandten Nachrichten, d.h. z.B. regionale Informationen zu Verkehr, Straßen etc., nur an die gewünschten Empfänger gesendet und/oder nur von den gewünschten Sendern empfangen werden können.

Kurze Beschreibung der Zeichnungen

Ausführungsbeispiele der Erfindung sind in den Zeichnungen dargestellt und werden in der nachfolgenden Beschreibung näher erläutert.

Figur 1 zeigt ein Ablaufdiagramm eines Verfahrens zum ortsselektiven Senden eines Signals mittels Funk gemäß einer Ausführungsform.

Figur 2 illustriert einen räumlichen Zusammenhang zwischen Sender und Empfänger eines Verfahrens zum ortsselektiven Senden gemäß einer Ausführungsform.

Figur 3 zeigt ein Ablaufdiagramm eines Verfahrens zum ortsselektiven Empfangen eines Signals mittels Funk gemäß einer Ausführungsform.

Figur 4 illustriert einen räumlichen Zusammenhang zwischen Sender und Empfänger eines Verfahrens zum ortsselektiven Empfangen gemäß einer Ausführungsform.

Ausführungsbeispiele der Erfindung

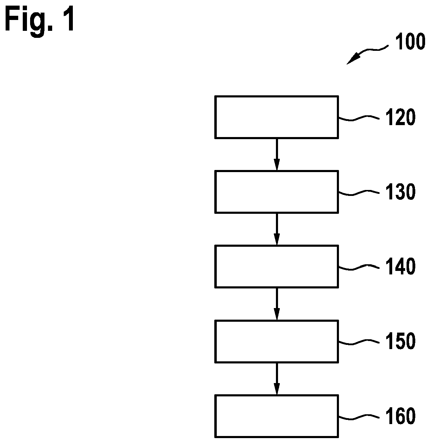

Figur 1 zeigt ein Verfahren 100 zum ortsselektiven Senden eines Signals mittels Funk.

Im ersten Schritt 120 des Verfahrens 100 wird sowohl ein Sender als auch ein Empfänger durch das Globale Positionsbestimmungssystem auf dieselbe Zeitreferenz synchronisiert.

In einem zweiten Schritt 130 des Verfahrens 100 empfängt und demoduliert der Empfänger zu den vorgegebenen Zeitpunkten der Zeitreferenz ein vom Sender gesendetes Signal, falls der Empfänger das Signal zu einem Zeitpunkt der vorgegebenen Zeitpunkte empfangen hat.

In einem dritten Schritt 140 des Verfahrens 100 bestimmt der Sender einen Empfangsort innerhalb einer Empfangszone, zu dem er das Signal selektiv senden will. Hierbei hängt eine Position der Empfangszone von einer Position des Senders und einer Signallaufzeit ab.

Hierbei wird eine Breite der ringförmigen Empfangszone vom Sender durch eine Wahl einer Länge eines Cyclic Prefix vergrößert. Ferner wird die Breite der ringförmigen Empfangszone durch eine zusätzliche Synchronisation am Empfänger vergrößert.

In einem vierten Schritt 150 des Verfahrens 100 sendet der Sender das Signal. Hierbei wird das Signal vom Sender so gesendet, dass nur ein Empfänger, welcher sich innerhalb der Empfangszone befindet, das Signal sinnvoll demodulieren kann. Dies kann unter anderem durch OFDM oder ein entsprechendes Spreizverfahren bewerkstelligt werden. Beispielsweise verwendet der Sender hierbei eine CAZAC-Folge zur Modulation des Mobilfunksignals und der Empfänger eine entsprechende Demodulation.

Das ortsselektive Senden der Ausgangsform der Figur 1 wird in einem Geocast-System verwendet.

In einem fünften Schritt 160 des Verfahrens 100 empfängt und demoduliert der Empfänger, welcher sich innerhalb der Empfangszone befindet, das Signal. Hierbei kann der Empfänger die Empfangszone unabhängig vom Sender durch eine zusätzliche Synchronisation vergrößern.

In der Ausführungsform der Figur 1 findet das Senden und Empfangen auf der Ebene der Bitübertragungsschicht statt.

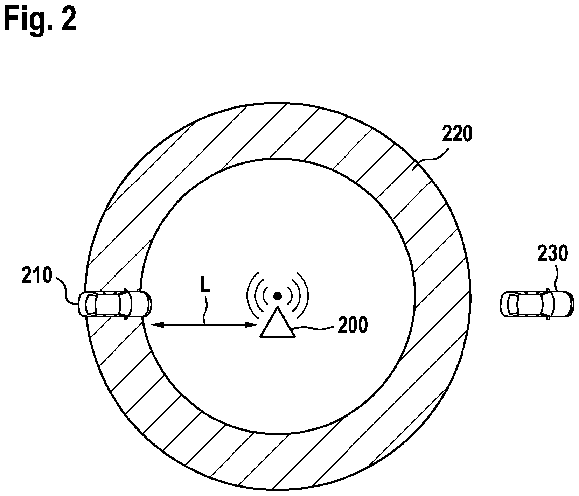

Figur 2 illustriert einen räumlichen Zusammenhang zwischen Sender und Empfänger eines Verfahrens zum ortsselektiven Senden.

Figur 2 zeigt einen ortsfesten Sender 200, welcher ein Signal an einen gewünschten Empfänger 210, welcher sich in der Empfangszone 220 befindet, senden möchte. Der gewünschte Empfänger 210 ist hierbei in einem Kraftfahrzeug angeordnet. Der Abstand zwischen dem Sender 200 und dem gewünschten Empfänger 210 beträgt L. Der Abstand L entspricht einer bestimmten Laufzeit zwischen dem Sender 200 und dem gewünschten Empfänger 210.

Das Signal wird vom Sender 200 so gesendet, dass nur der gewünschte Empfänger 210, welcher sich innerhalb der Empfangszone 220 befindet, das Signal sinnvoll demodulieren kann. Ein unerwünschter Empfänger 230, welcher sich nicht innerhalb der Empfangszone 220 befindet, kann das Signal nicht sinnvoll demodulieren. Der unerwünschte Empfänger 230 ist hierbei ebenfalls in einem Kraftfahrzeug angeordnet.

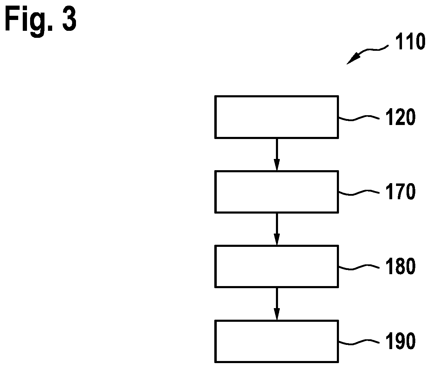

Figur 3 zeigt ein Verfahren 110 zum ortsselektiven Empfangen eines Signals mittels Funk.

In einem ersten Schritt 120 des Verfahrens 110 werden sowohl ein Sender als auch ein Empfänger durch das Globale Positionsbestimmungssystem auf dieselbe Zeitreferenz synchronisiert.

In einem dritten Schritt 170 des Verfahrens 110 sendet der Sender zu vorgegebenen Zeitpunkten der Zeitreferenz ein Signal. Der Sender verwendet hierbei eine CAZAC-Folge zur Modulation des Funksignals und der Empfänger eine entsprechende Demodulation.

In einem vierten Schritt 180 des Verfahrens 110 bestimmt der Empfänger einen Sendeort innerhalb einer Sendezone, von dem er das Signal selektiv empfangen will. Hierbei hängt eine Position der Sendezone von einer Position des Empfängers und einer Signallaufzeit ab.

In einem fünften Schritt 190 des Verfahrens 110 empfängt der Empfänger ein vom Sender gesendetes Signal zu dem gewählten Empfangszeitpunkt, welcher sich aus Sendezeitpunkt und Signallaufzeit zusammensetzt woraufhin der Empfänger das Signal bei erfolgreicher Detektion demoduliert.

In der Ausführungsform der Figur 3 findet das Senden und Empfangen auf der Ebene der Bitübertragungsschicht statt.

Das ortsselektive Empfangen der Ausführungsform der Figur 3 wird in einem Geocast-System verwendet.

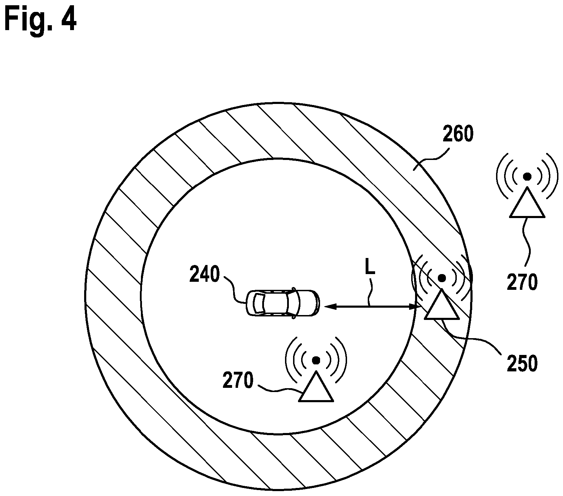

Figur 4 illustriert einen räumlichen Zusammenhang zwischen Sender und Empfänger eines Verfahrens zum ortsselektiven Empfangen.

Figur 4 zeigt einen nicht ortsfesten Empfänger 240, welcher in einem Kraftfahrzeug angeordnet ist. Der nicht ortsfeste Empfänger 240 beabsichtigt ein Signal von einem gewünschten Sender 250, welcher sich in der Sendezone 260 befindet, zu empfangen. Der Abstand zwischen dem gewünschten Sender 250 und dem Empfänger 240 beträgt L. Der Abstand L entspricht einer bestimmten Laufzeit zwischen dem gewünschten Senden 250 und den Empfänger 240. Da der Sender zu einem Zeitpunkt von vorgegebenen Zeitpunkten der Zeitreferenz ein Signal sendet und die Sendezone 260 des gewünschten Senders 250 bekannt ist, kann der Empfänger 240 berechnen, zu jeweils welchen Zeitpunkten er ein Signal erwarten kann. Wenn er zusätzlich den Sendezeitpunkt kennt, kann er berechnen, aus welcher Entfernung der Sender das Signal an ihn gesendet hat.

Die Position der Sendezone 260 hängt von der Position des Empfängers 240 und der Laufzeit des Signals ab. Der Empfänger 240 wartet zu den oben genannten Zeitpunkten auf ein von einem Sender gesendetes Signal. Falls der Empfänger 240 ein für ihn sinnvoll demodulierbares Signal erkannt hat, so empfängt und demoduliert er das Signal.

Von den unerwünschten Sendern 270, welche sich außerhalb der Sendezone 260 befinden, werden keine Nachrichten empfangen, da die entsprechenden Laufzeiten in der Regel nicht der erwarteten Laufzeit entsprechen.

## Patentansprüche

1. Verfahren (100) zum ortsselektiven Senden und Empfangen eines Signals mittels Funk, wobei

   sowohl ein Sender (200) als auch ein Empfänger (210) auf dieselbe Zeitreferenz synchronisiert sind (120), und
   der Empfänger (210) zu einem Zeitpunkt von vorgegebenen Zeitpunkten der Zeitreferenz ein vom Sender (200) gesendetes Signal empfängt und demoduliert, falls der Empfänger (210) das Signal zu einem Zeitpunkt der vorgegebenen Zeitpunkte empfangen hat (130);
   mit folgenden Schritten:

   der Sender (200) bestimmt einen Empfangsort, an dem sich der Empfänger (210) befindet und zu dem er das Signal selektiv senden will (140),
   wobei der Empfangsort sich innerhalb einer ringförmigen Empfangszone (220) befindet,
   wobei eine Position der ringförmigen Empfangszone (220) von einer Position des Senders (200) und einer Signallaufzeit abhängt,
   der Sender (200) ändert eine radiale Ausdehnung der ringförmigen Empfangszone (220) durch eine Wahl der Signalstruktur,
   der Sender (200) sendet das Signal (150); und
   der Empfänger (210), welcher sich innerhalb der ringförmigen Empfangszone (220) mit der geänderten radialen Ausdehnung befindet, empfängt und demoduliert das Signal (160).

2. Verfahren nach Anspruch 1, **dadurch gekennzeichnet, dass** das Signal vom Sender (200) so gesendet wird, dass nur ein Empfänger (210), welcher sich innerhalb der ringförmigen Empfangszone (220) befindet, das Signal sinnvoll demodulieren kann.

3. Verfahren nach einem der vorangegangenen Ansprüche, **dadurch gekennzeichnet, dass** der Sender eine CAZAC-Funktion oder eine CAZAC-Folge zur Modulation des Funksignals und der Empfänger (210, 240) eine entsprechende Demodulation verwendet.

4. Verfahren nach einem der vorangegangenen Ansprüche, **dadurch gekennzeichnet, dass** das Senden und Empfangen auf der Ebene der Bitübertragungsschicht stattfindet.

5. Verfahren nach einem der vorangegangenen Ansprüche, **dadurch gekennzeichnet, dass** das der Sender (200, 250) als auch der Empfänger (210, 240) durch das Globale Positionsbestimmungssystem auf dieselbe Zeitreferenz synchronisiert sind.

6. Verfahren nach einem der vorangegangenen Ansprüche, **dadurch gekennzeichnet, dass** das ortsselektive Senden und / oder Empfangen in einem Geocast-System verwendet wird.

7. System zum ortsselektiven Senden und Empfangen eines Signals mittels Funk mit einem Sender (200) und einem Empfänger (210), wobei sowohl der Sender (200) als auch der Empfänger (210) auf dieselbe Zeitreferenz synchronisiert sind (120),

   der Empfänger (210) eingerichtet ist, zu einem Zeitpunkt von vorgegebenen Zeitpunkten der Zeitreferenz ein vom Sender (200) gesendetes Signal zu empfangen und zu demodulieren, falls der Empfänger (210) das Signal zu einem Zeitpunkt der vorgegebenen Zeitpunkte empfangen hat;
   der Sender (200) eingerichtet ist, einen Empfangsort, an dem sich der Empfänger (210) befindet und zu dem er das Signal selektiv senden will (140), zu bestimmen, wobei sich der Empfangsort innerhalb einer ringförmigen Empfangszone (220) befindet, wobei eine Position der ringförmigen Empfangszone (220) von einer Position des Senders (200) und einer Signallaufzeit abhängt, eine radiale Ausdehnung der ringförmigen Empfangszone (220) durch eine Wahl der Signalstruktur zu ändern, und das Signal zu senden;
   der Empfänger (210), welcher sich innerhalb der ringförmigen Empfangszone (220) mit der geänderten radialen Ausdehnung befindet, eingerichtet ist, das Signal zu empfangen und zu demodulieren.

## Claims

1. Method (100) for the location-selective sending and receiving of a signal by radio, wherein

both a transmitter (200) and a receiver (210) are synchronized to the same time reference (120), and,

at a time from predetermined times of the time reference, the receiver (210) receives and demodulates a signal sent by the transmitter (200) if the receiver (210) has received the signal at a time among the predetermined times (130); having the following steps:

the transmitter (200) determines a receiving location at which the receiver (210) is located and to which it wants to selectively send the signal (140),

the receiving location being located within an annular receiving zone (220),

a position of the annular receiving zone (220) being dependent on a position of the transmitter (200) and a signal propagation time,

the transmitter (200) alters a radial extent of the annular receiving zone (220) by selecting the signal structure,

the transmitter (200) sends the signal (150); and

the receiver (210), which is located within the annular receiving zone (220) with the altered radial extent, receives and demodulates the signal (160).

2. Method according to Claim 1, **characterized in that** the signal is sent by the transmitter (200) in such a way that only a receiver (210) that is located within the annular receiving zone (220) can usefully demodulate the signal.

3. Method according to either of the preceding claims, **characterized in that** the transmitter uses a CAZAC function or a CAZAC sequence to modulate the radio signal and the receiver (210, 240) uses a corresponding demodulation.

4. Method according to one of the preceding claims, **characterized in that** the sending and receiving takes place at the level of the physical layer.

5. Method according to one of the preceding claims, **characterized in that** the transmitter (200, 250) and the receiver (210, 240) are synchronized to the same time reference by the Global Positioning System.

6. Method according to one of the preceding claims, **characterized in that** the location-selective sending and/or receiving is used in a geocast system.

7. System for the location-selective sending and receiving of a signal by radio comprising a transmitter (200) and a receiver (210), wherein both the transmitter (200) and the receiver (210) are synchronized to the same time reference (120),

the receiver (210) is configured so as, at a time from predetermined times of the time reference, to receive and demodulate a signal sent by the transmitter (200) if the receiver (210) has received the signal at a time among the predetermined times;

the transmitter (200) is configured so as to determine a receiving location at which the receiver (210) is located and to which it wants to selectively send the signal (140), the receiving location being located within an annular receiving zone (220), a position of the annular receiving zone (220) being dependent on a position of the transmitter (200) and a signal propagation time, so as to alter a radial extent of the annular receiving zone (220) by selecting the signal structure, and so as to send the signal;

the receiver (210), which is located within the annular receiving zone (220) with the altered radial extent, is configured so as to receive and demodulate the signal.

**Revendications**

1. Procédé (100) pour l'émission et la réception d'un signal par radio, sélectivement en fonction d'un emplacement, dans lequel

un émetteur (200) et un récepteur (210) sont tous deux synchronisés (120) sur la même référence de temps, et

le récepteur (210) reçoit à un moment parmi des moments prédéterminés de la référence temporelle un signal émis par l'émetteur (200) et le démodule si le récepteur (210) a reçu (130) le signal à un moment parmi les moments prédéterminés ;

comprenant les étapes suivantes :

l'émetteur (200) détermine un emplacement de réception où se trouve le récepteur (210) et auquel il souhaite (140) émettre sélectivement le signal,

l'emplacement de réception se trouvant à l'intérieur d'une zone de réception annulaire (220),

un emplacement de la zone de réception annulaire (220) dépendant d'un emplacement de l'émetteur (200) et d'un temps de propagation du signal,

l'émetteur (200) modifie une étendue radiale de la zone de réception annulaire (220) par une sélection de la structure du signal,

l'émetteur (200) émet le signal (150) ; et le récepteur (210), qui se trouve à l'intérieur de la zone de réception annulaire (220) dont l'étendue radiale a été modifiée, reçoit et démodule le signal (160).

2. Procédé selon la revendication 1, **caractérisé en ce que** le signal est émis par l'émetteur (200) de telle sorte que seul un récepteur (210) se trouvant à l'intérieur de la zone de réception annulaire (220) soit apte à démoduler le signal de manière significative.

3. Procédé selon l'une des revendications précédentes, **caractérisé en ce que** l'émetteur utilise une fonction CAZAC ou une séquence CAZAC pour moduler le signal radio et le récepteur (210, 240) utilise une démodulation correspondante.

4. Procédé selon l'une des revendications précédentes, **caractérisé en ce que** l'émission et la réception se font au niveau de la couche de transmission de bits.

5. Procédé selon l'une des revendications précédentes, **caractérisé en ce que** l'émetteur (200, 250) et le récepteur (210, 240) sont synchronisés sur la même référence de temps par le système de positionnement global.

6. Procédé selon l'une des revendications précédentes, **caractérisé en ce que** l'émission et/ou la réception sélective en fonction de l'emplacement est utilisée dans un système de géocast.

7. Système pour l'émission et la réception d'un signal par radio, sélectivement en fonction d'un emplacement, comprenant un émetteur (200) et un récepteur (210), l'émetteur (200) et le récepteur (210) étant tous deux synchronisés (120) sur la même référence de temps,

le récepteur (210) est agencé pour recevoir un signal émis par l'émetteur (200) à un moment parmi des moments prédéterminés de la référence de temps et pour le démoduler si le récepteur (210) a reçu le signal à un moment parmi les moments prédéterminés ;
l'émetteur (200) est agencé pour déterminer un emplacement de réception où se trouve le récepteur (210) et vers lequel il souhaite (140) émettre sélectivement le signal, l'emplacement de réception se trouvant à l'intérieur d'une zone de réception annulaire (220), un emplacement de la zone de réception annulaire (220) dépendant d'un emplacement de l'émetteur (200) et d'un temps de propagation du signal, pour modifier une étendue radiale de la zone de réception annulaire (220) par une sélection de la structure du signal, et pour émettre le signal ;
le récepteur (210), qui se trouve à l'intérieur de la zone de réception annulaire (220) avec l'étendue radiale modifiée, est conçu pour recevoir et démoduler le signal.

## Fig. 1

100

| 120 |

| 130 |

| 140 |

| 150 |

| 160 |

# Fig. 2

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030153288 A1
- WO 2008147085 A2